# EUROPEAN PATENT APPLICATION

(11) **EP 1 176 565 A2**
(43) Date of publication of application: **30.01.2002**
(21) Application number: 01305929.0
(22) Date of filing: 10.07.2001
(51) Int. Cl.: G07G 1/14

(54) **System and method for stocking products with an electronic price label system**

(30) Priority: 25.07.2000 US 624737
(71) Applicant: NCR INTERNATIONAL INC., Dayton, Ohio 45479 (US)
(72) Inventor: Goodwin, John Coker III, Suwanee, Georgia 30024 (US)
(74) Representative: Williamson, Brian

(57) **Abstract**

A system and method are disclosed for stocking products with an electronic price label (EPL) system. An EPL in the system may be actuated, either by a store employee or a customer, when the shelf stock of the corresponding merchandise item has been depleted. The EPL then displays an icon to indicate that the item is out of stock. A stock management computer program determines when an EPL has been actuated, and sends information concerning the out-of-stock product to a visual display in the store's stock room. Store personnel can actuate the stock room visual display to alert the system that appropriate quantities of the product have been pulled from a stock room bin. The applicable EPL then may be actuated a second time, by store personnel, when the store shelves have been restocked with the item.

## Description

The present invention relates to electronic price label (EPL) systems, and more specifically to a system and method for stocking products with an EPL system.

Point-of-sale (POS) transaction processing systems typically include a price look-up (PLU) file which contains item identification information and item price information.

EPL systems typically include a plurality of EPLs for merchandise items in a store. EPLs display the price of corresponding merchandise items on store shelves and are typically attached to a rail along the leading edge of the shelves. A store may contain thousands of EPLs to display the prices of the merchandise items. The EPLs are coupled, through a cable or wireless signal connection, to a central server from where information about the EPLs is typically maintained in an EPL data file. Price information displayed by the EPLs is obtained from the PLU file.

To keep the cost of EPLs to a minimum, EPLs generally have included a limited memory capacity, spread across a plurality of data registers. Such EPLs have been used by retailers to display minimal information, such as regular (retail) price and price per unit. However, retailers wish to use EPLs to display ever-increasing amounts of alternate information (i.e., other than regular price and unit price), and to perform more and more functions in-aisle.

One major area of concern for retailers is the proper management of stock on their shelves. Due to shelf space limitations, only a portion of the store's inventory is kept on the selling floor, while additional supplies of products are maintained in various stock room bins in the store's "back office." Typically, the store periodically restocks its shelves with inventory from the back office. However, if the entire shelf stock of a product has been sold, and the shelf stock is not promptly replenished from back office inventory, the store may stand to lose considerable sales, resulting in reduced profits.

A traditional approach to the management of shelf stock is for individual store employees to tour the store in order to identify any out-of-stock items. In recent times, such employees have carried hand-held computer terminals to enter such information as the identity of a particular out-of-stock item, the specific location of such item on the selling floor, the quantity of such item that must be brought out from the stock room, and the like. However, such hand-held computer terminals typically cost on the order of US $3,000 each, and anywhere from approximately 15 to 45 such terminals may be required for a single store. Moreover, these expensive hand-held devices are susceptible to being misplaced or damaged.

Therefore, it would be desirable to provide a system and method for stocking products with an EPL system, to facilitate the rapid replenishment of shelf stock, and to eliminate the need for employees to tour the store carrying expensive hardware.

In accordance with the teachings of the present invention, a computerized system and method for stocking products with an EPL system is provided.

The system includes a computer system coupled to a plurality of electronic price labels, comprising:
means for setting an electronic price label for actuation in the event that the shelf stock of a corresponding product has been depleted;
means for polling electronic price labels in the system to determine if any electronic price label has been actuated;
means for identifying the product corresponding to an electronic price label that has been actuated;
means for determining whether an identified product has been picked from stock room inventory; and
means for setting an electronic price label for actuation when the shelf stock of the identified product has been replenished.

The computerized method for stocking products with an electronic price label system includes the steps of:
(a) actuating an electronic price label in the event that the shelf stock of a corresponding product has been depleted;
(b) polling electronic price labels in the system to determine if any electronic price label has been actuated as provided for in step (a);
(c) identifying the product corresponding to an electronic price label that has been actuated;
(d) determining whether the product identified in step (c) has been picked from stock room inventory; and
(e) for each product that has been picked from stock room inventory, transmitting a signal to the corresponding electronic price label, whereby the electronic price label is set to be actuated when the shelf stock of the product has been replenished.
   The method of the invention may include the further step of:
(f) polling electronic price labels in the system to determine if any electronic price label has been actuated as provided for in step (e).

According to an aspect of the present invention there is provided a computerized method for stocking products with an electronic price label system, comprising the steps of:
(a) actuating an electronic price label in the event that the shelf stock of a corresponding product has been depleted;
(b) polling electronic price labels in the system to determine if any electronic price label has been actuated as provided for in step (a);
(c) identifying the product corresponding to an electronic price label that has been actuated;
(d) determining whether the product identified in step (c) has been picked from stock room inventory; and
(e) for each product that has been picked from stock room inventory, transmitting a signal to the corresponding electronic price label, whereby the electronic price label is set to be actuated when the shelf stock of the product has been replenished.

According to a further aspect of the of the present invention there is provided a computerized system for stocking products with an electronic price label system, comprising:
means for setting an electronic price label for actuation in the event that the shelf stock of a corresponding product has been depleted;
means for polling electronic price labels in the system to determine if any electronic price label has been actuated;
means for identifying the product corresponding to an electronic price label that has been actuated;
means for determining whether an identified product has been picked from stock room inventory; and
means for setting an electronic price label for actuation when the shelf stock of the identified product has been replenished

An embodiment of the present invention will now be described, by way of example, with reference to the accompanying drawings, in which:
Fig. 1 is a block diagram of a transaction processing system;
Figs. 2A and 2B are perspective views of an EPL displaying the price of a merchandise item, the latter also displaying an icon representing that the item needs to be restocked;
Fig. 3 is a diagram showing a plurality of registers of an EPL;
Fig. 4 is a diagram showing the contents of a back office "tote board" listing merchandise items to be restocked; and
Fig. 5 is a flow diagram illustrating an embodiment of the stocking method of the present invention.

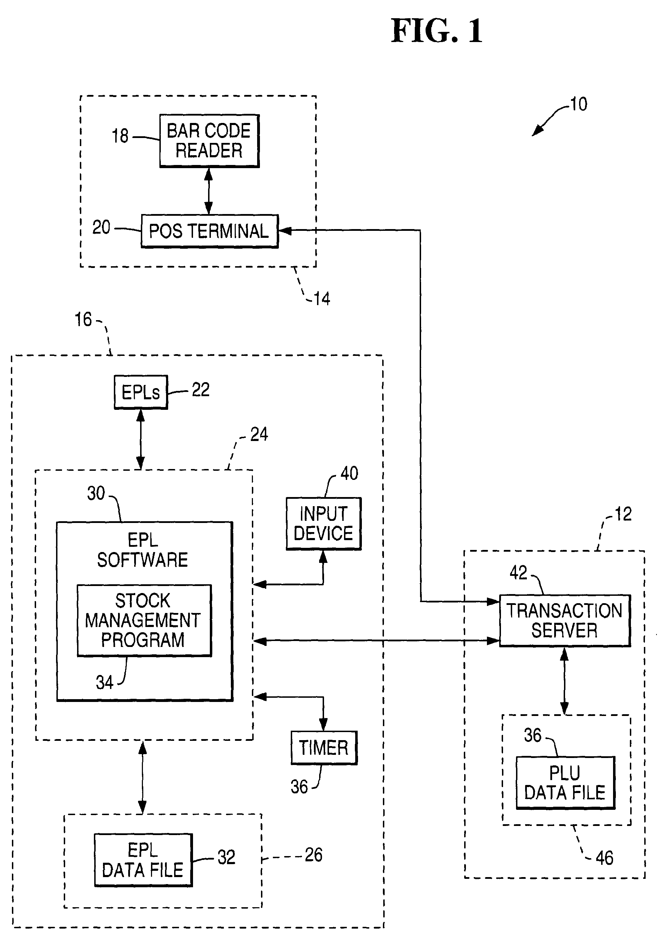

Referring now to Fig. 1, transaction system 10 primarily includes host computer system 12, point-of-sale (POS) system 14, and EPL system 16. Here, components 12 and 14 are shown as separate components that are networked together, but they may also form a single component. Thus, host computer system 12 may be a POS terminal which doubles as a host computer for a network of other POS terminals.

POS system 14 includes bar code reader 18 and POS terminal 20.

EPL system 16 primarily includes EPLs 22, host EPL computer 24, and EPL storage medium 26.

EPLs 22 display price and, optionally, other information about specific merchandise items. In the present invention, EPLs 22 are capable of being actuated in the event that the shelf stock of a corresponding product has been depleted, or upon restocking of the product.

Host EPL computer 24 executes EPL software 30 and stock management program 34. To assist with execution of certain tasks performed by EPL software 30 and stock management program 34, EPL computer 24 may include a built-in time keeping device 36, commonly referred to as a system clock. Timer 36 is synchronized with current time, so that EPL computer 24 may automatically execute certain tasks at their scheduled times, as well as track the dates and times at which certain tasks actually are performed.

EPL communication software 30 schedules and carries out the transmission of data to and from EPLs 22. One function of EPL software 30 is to schedule and transmit price data from EPL data file 32 to EPLs 22. EPL software 30 obtains prices in PLU data file 46 as these are entered in input device 40 (immediate processing) or after these have been stored within price look-up (PLU) data file 46 (batch processing). EPL software 30 also updates EPL data file 32 with the information transmitted to, and now being displayed by, the applicable EPL 22.

Another function of EPL software 30 is to transmit polling signals to one or more EPLs 22. In order to respond to the poll, an EPL 22 "reflects" the polling signal back to EPL computer 24 within a predetermined time interval of receiving the polling signal.

In response to a user request entered via input device 40, or at scheduled times, stock management program 34 generates various messages to carry out the method of the present invention. For example, the purpose of one such message is to place the EPLs 22 in "determine shelf stock level" mode. In this mode, an EPL 22 is set to display a special icon or symbol if actuated when the shelf stock of a corresponding product has been depleted, or to turn off the special icon if actuated when the shelf has been restocked. The purpose of another such message is to poll EPLs 22 to determine if any EPL has been actuated due to depletion or restocking of shelf inventory, as the case may be. The purpose of another such message is to identify, and store information about, products that need to be restocked, so that the information can be viewed by the personnel responsible for restocking. The purpose of yet another such message is to keep track of all identified products which, accordingly, have been picked from stock room inventory. Stock management program 34 passes each of these messages to EPL software 30 for transmission to and from the applicable EPLs 22.

EPL storage medium 26 stores EPL data file 32. EPL storage medium 26 is preferably a fixed disk drive.

EPL data file 32 contains EPL identification and price checksum information, corresponding to the information currently being displayed by EPLs 22. Price checksum information is calculated from price information in PLU data file 46.

Input device 40 is preferably a keyboard.

Host computer system 12 includes PLU storage medium 44 and transaction server 42.

Transaction server 42 handles price requests from POS terminal 20. POS terminal 20 sends item identification information to transaction server 42 and transaction server 42 returns the corresponding price from PLU data file 46.

PLU storage medium 44 stores PLU data file 46. PLU data file 46 is available for distribution to POS terminal 20. Provision may be made for direct access to PLU data file 46 by bar code reader 18.

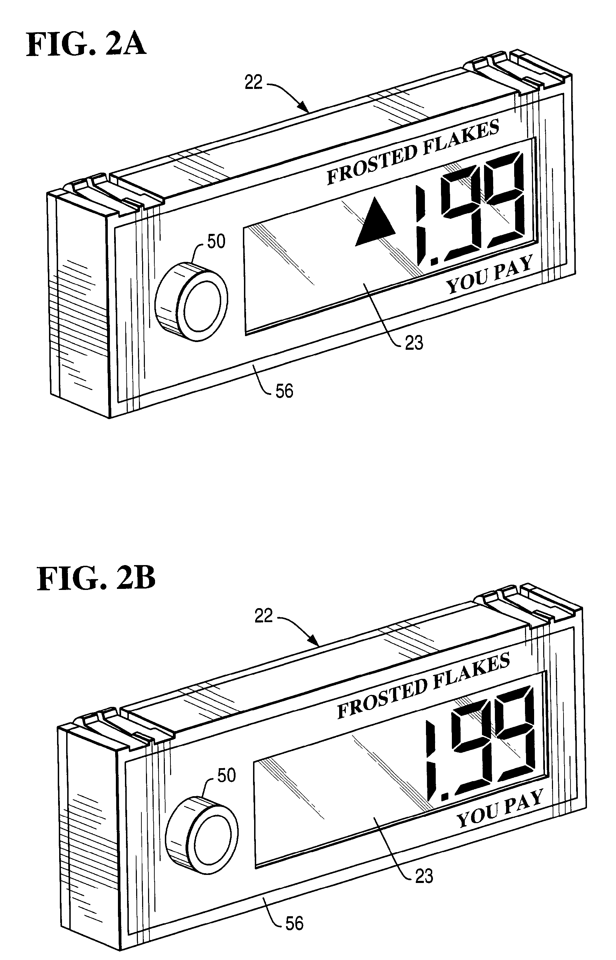

Turning now to Figs. 2A and 2B, an EPL 22 is shown in greater detail. The front surface 56 of the EPL housing includes display 23 and push-button switch 50. In Fig. 2A, the applicable merchandise item is in stock on the store shelves, and display 23 simply shows the price of the item. In Fig. 2B, the shelf stock of the item needs to be replenished. Accordingly, in Fig. 2B, display 23 shows a triangular "restock" icon, in addition to the price of the item. This "restock" icon, which alternatively may be any other convenient shape or symbol, is a visual cue to the responsible personnel that the shelf stock of the item is depleted and has not yet been replenished.

Push-button switch 50 is a preferred means for actuating EPL 22. Button 50 is intended to be pushed, by either a store employee or a customer, when the shelf stock of the corresponding merchandise item has been depleted. Once actuated, EPL 22 is in "restock" mode and displays the price plus the "restock" icon, as shown in Fig. 2B. Button 50 is intended to be pushed, once again, by store personnel, when the store shelves have been restocked with the item. Upon such further actuation, EPL 22 once again displays the price without the "restock" icon, as shown in Fig. 2A.

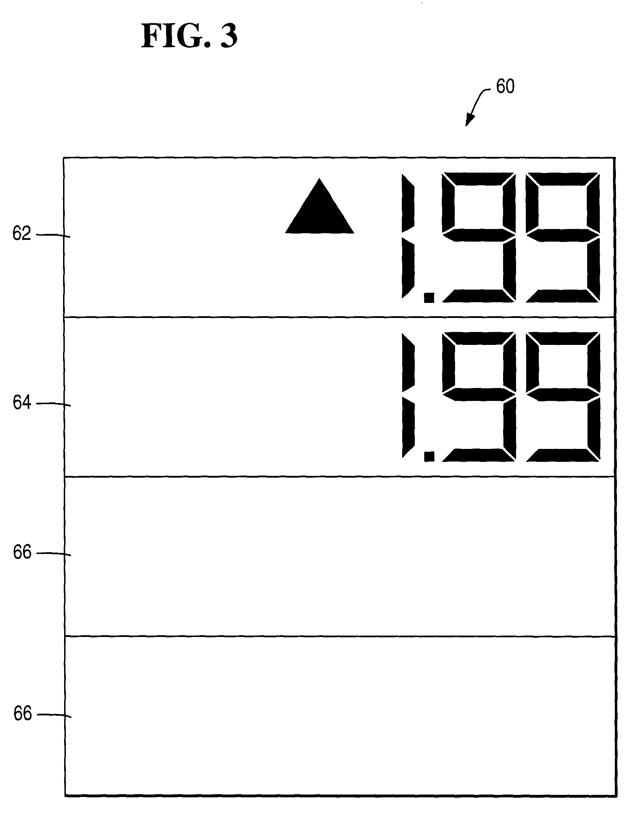

Fig. 3 depicts a set 60 of data registers, comprising the memory of an EPL 22. A first register 62 ("Register 1") contains the product price plus "restock" icon, corresponding to the display in Fig. 2B. A second register 64 ("Register 2") contains the product price without "restock" icon, corresponding to the display in Fig. 2A. In a preferred embodiment of the stocking system of the present invention, an EPL 22 normally displays the contents of Register 2. Actuation of the EPL, for example, by pushing button 50, causes the EPL to "back up" so as to display the contents of Register 1. In another embodiment of the invention, the switching between Register 1 and Register 2 upon actuation of EPL 22 can be effected using a button counter. Additional data registers 66 are available to store other information for display by EPL 22 and, if desired, may be accessed upon actuation of EPL 22.

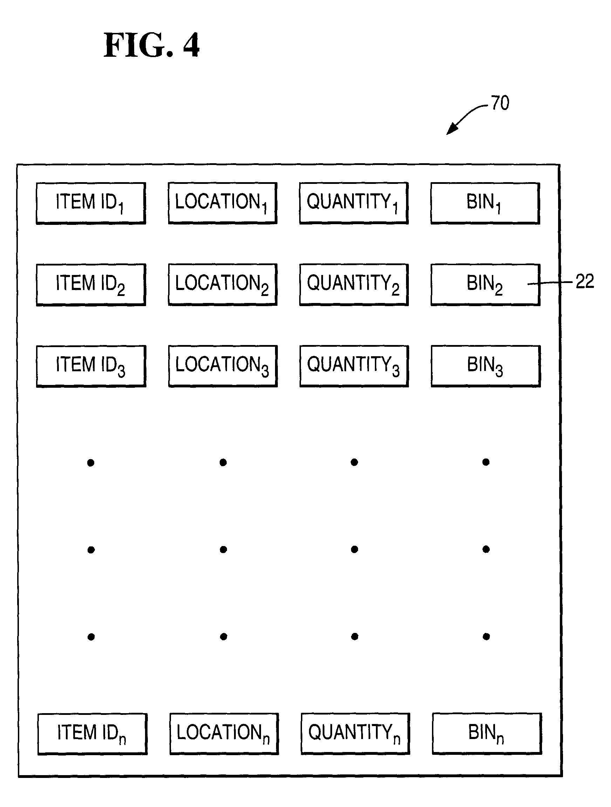

Fig. 4 shows the contents of back office "tote board" 70 which, based on information supplied by the system, lists merchandise items to be restocked. As described above in connection with Fig. 1, EPL computer 24 polls EPLs 22 to determine whether any EPLs 22 are in "restock" mode. The system then identifies each product corresponding to an EPL that is in "restock" mode (for example, by cross-referencing with EPL data file 32), and compiles a list of such products. In a preferred embodiment of the invention, the list is ordered from the "most critical" to the "least critical" merchandise item. That is, the product that brings the most value to the store (and which, if out of stock, would generate the greatest opportunity cost to the store) appears first in the list. The remaining out-of-stock products are ranked in order of their respective value to the store, and are listed in the same order. It is anticipated that the list will be updated as various products in the list are restocked, and as additional products are identified as being out of stock. Thus, the specific merchandise items in the list, as well as the order in which these are listed, will change regularly.

Tote board 70 provides a convenient means for the responsible personnel to view the list of items in need of restocking, and to build a cart of such items to bring out to the selling floor. Tote board 70 is essentially an electronic "bulletin board," which may be made up of an array of EPLs 22. Alternatively, tote board 70 can be implemented as a standard LED display or on a computer screen.

The information listed on tote board 70 for each out-of-stock item, numbered 1 through n in Fig. 4, includes entries "ITEM ID," "Location," "Quantity" and "Bin." Entry "ITEM ID" may include, for example, the name of the out-of-stock item, the Universal Product Code (UPC) associated with the item, or both. Entry "Location" specifies the depleted shelf location out on the selling floor. In one embodiment, the data provided in the "Location" entry may conform with the "Plan-o-gram" system of mapping merchandise locations throughout the store. Entry "Quantity" indicates the quantity of the applicable item to be pulled from inventory. Finally, entry "Bin" indicates exactly where the stock of the particular item is located in the store's back room. It will be apparent that it is also within the scope of the invention to generate printed reports containing all of the above information.

In addition to, or instead of, tote board 70, the present invention contemplates the use of display indicia, such as EPLs, directly on individual stock room bins. Such indicia display information supplied by the system, including information corresponding to one or more of the entries "ITEM ID," "Location" and "Quantity" described above, and thereby notify the responsible personnel to select the appropriate quantity of the appropriate item from the particular stock room bin bearing such display.

Preferably, the restocking system includes means for actuating the tote board after a particular item has been pulled from inventory and/or placed on the restocking cart. In an especially preferred embodiment, tote board 70 includes a plurality of buttons or switches (not shown in Fig. 4), each button or switch corresponding to a particular merchandise item in the list. Thus, in Fig. 4, tote board 70 would include n buttons or switches, each such button or switch being disposed so as to correspond, respectively, to each row, 1 through n, of EPLs 22. The applicable button or switch is pushed by a store employee to indicate that the particular item has been retrieved from its stock room bin. Alternatively, a comparable button or switch arrangement could be utilized in conjunction with display indicia located directly on each individual stock room bin, as described above.

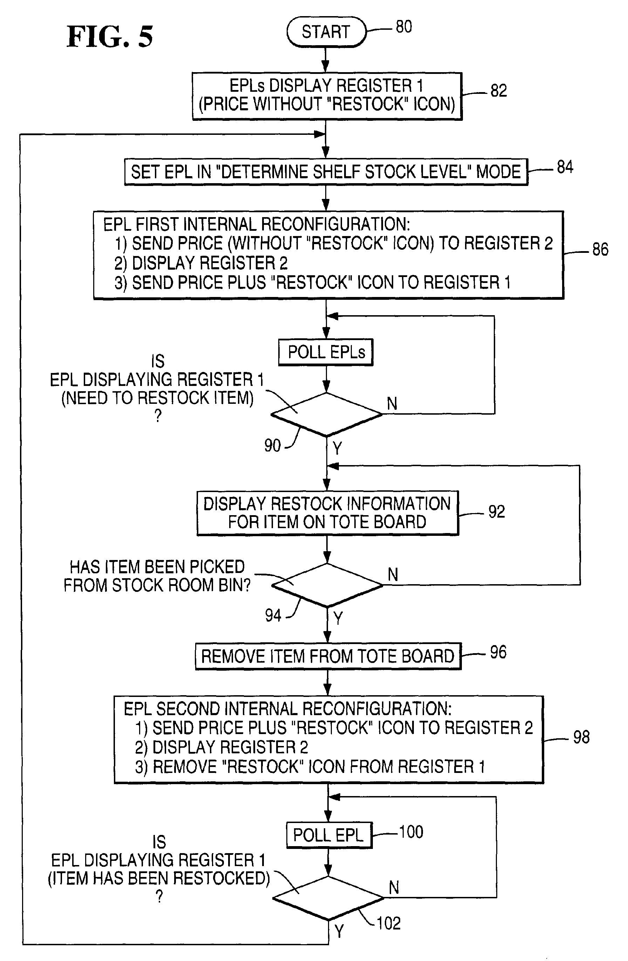

Turning now to Fig. 5, a method for stocking products with an EPL system begins with START 80.

In step 82, stock management program 34 sends a message to each EPL 22 in the system, whereby: (1) the price of the applicable merchandise item, without the "restock" icon, is sent to Register 1 of each EPL, and (2) the EPLs display the contents of Register 1.

In step 84, in response to an operator request (or, as will be described below, in response to information received from polling the EPLs), the program sets a particular EPL in "Determine Shelf Stock Level" mode.

In step 86, the EPL that was set in step 84 now undergoes a first internal reconfiguration. To accomplish this, the program sends a message to the applicable EPL, whereby: (1) the price of the applicable merchandise item, without the "restock" icon, is sent to Register 2; (2) the EPL displays the contents of Register 2; and (3) the price of the merchandise item, plus the "restock" icon, is sent to Register 1. The EPL 22 now is set for actuation. In the event that the shelf stock of the corresponding product has been depleted, either a store employee or a customer can actuate EPL 22 by pushing button 50, which causes the EPL to display the contents of Register 1 (price of item, plus the "restock" icon).

In step 88, EPL computer 24 polls all EPLs 22 in the system.

In step 90, the program determines whether any EPLs 22 are displaying the contents of Register 1, indicative of "restock" mode. If no EPL is displaying Register 1, operation returns to step 88. If an EPL is displaying Register 1, operation proceeds to step 92.

In step 92, the program identifies the out-of-stock item corresponding to the EPL that is displaying Register 1. This information can be determined, for example, by reading the appropriate line entry in EPL data file 32. Either EPL data file 32 or an additional data file may contain the "Location," "Quantity" and "Bin" information for the product, as described above. The program then transmits this information for display on tote board 70. At some point after this information appears on tote board 70, a store employee will pull the appropriate quantity of the item from the stock room bin, and will actuate tote board 70 (for example, by pushing the appropriate button thereon) to indicate that the item has been picked.

In step 94, the program determines whether tote board 70 has been actuated, and thus whether the out-of-stock item has been picked from the stock room bin. If the item has not yet been picked, operation returns to step 92. If the item has been picked, operation proceeds to step 96.

In step 96, the item is removed from tote board 70. Operation then proceeds to step 98.

In step 98, the program sets the applicable EPL 22 in "autopull compliance" mode. Thus the EPL, which in step 90 was determined to be in "restock" mode, now undergoes a second internal reconfiguration. To accomplish this, the program sends a message to the EPL, whereby: (1) the price of the applicable merchandise item, plus the "restock" icon, is sent to Register 2; (2) the EPL displays the contents of Register 2; and (3) the price of the merchandise item, without the "restock" icon, is sent to Register 1. In view of the computer's rapid computational speed, it should be understood that step 98 occurs almost simultaneously with step 96.

The EPL 22 now is set for actuation by a store employee, upon replenishing the shelf stock of the item. At such time, the store employee will push button 50, which will cause the EPL to display the contents of Register 1 (price of item, without the "restock" icon).

In step 100, EPL computer 24 polls the applicable EPL 22.

In step 102, the program determines whether EPL 22 is now displaying the contents of Register 1, indicating that the applicable item has been restocked on the selling floor. If the EPL is not displaying Register 1, operation returns to step 100. If the EPL is displaying Register 1, operation returns to step 84.

A valuable benefit provided by the present invention is that it gives the retailer the ability to track the productivity of key stocking functions in a particular store, or to compare such productivity across a plurality of stores. For example, utilizing timer 36, all significant inventory events can be "time-stamped." Stock management program 34 accordingly can track the exact time ("Time A") that a particular EPL was actuated and thereby placed into "restock" mode. The program also can track the exact time ("Time B") that tote board 70 was actuated (indicating that the corresponding product was pulled from back room inventory) and that the applicable EPL was set in "autopull compliance" mode. The program also can track the exact time ("Time C") that the EPL was again actuated (indicating that the shelf stock of the product has been replenished).

Thus, the program can calculate how long it took to restock the item on the selling floor after the initial out-of-stock notification (specifically, Time C minus Time A). The program also can make separate calculations for the constituent activities: (1) how long it took to pick the item from back room inventory after the initial out-of-stock notification (specifically, Time B minus Time A), and (2) how long it took to restock the item on the selling floor after picking the item from back room inventory (specifically, Time C minus Time B). Moreover, any of these times can be compared, for example, between two different products in the same store, two or more different employees in the same store, the same product in two or more different stores, and the like. It is also within the present invention to calculate average times for all employees within a single store, and to compare these averages with similar averages calculated for other stores.

Although the present invention has been described with particular reference to certain preferred embodiments thereof, variations and modifications can be effected within the scope of the present invention.

## Claims

1. A computerized method for stocking products with an electronic price label system, comprising the steps of:
(a) actuating an electronic price label in the event that the shelf stock of a corresponding product has been depleted;
(b) polling electronic price labels in the system to determine if any electronic price label has been actuated as provided for in step (a);
(c) identifying the product corresponding to an electronic price label that has been actuated;
(d) determining whether the product identified in step (c) has been picked from stock room inventory; and
(e) for each product that has been picked from stock room inventory, transmitting a signal to the corresponding electronic price label, whereby the electronic price label is set to be actuated when the shelf stock of the product has been replenished.

2. A method as claimed in claim 1, comprising the step of:
(f) polling electronic price labels in the system to determine if any electronic price label has been actuated as provided for in step (e).

3. A method as claimed in claim 1, wherein an electronic price label, once actuated as provided for in step (a), displays visual indicia that the shelf stock of the product has been depleted and has not yet been replenished.

4. A method as claimed in the preceding claim, comprising determining the date and time that an electronic price label has been actuated as provided for in step (a).

5. A method as claimed in claim 4, comprising determining the date and time that an electronic price label has been actuated as provided for in step (e).

6. A method as claimed in claim 5, comprising determining the date and time that the product identified in step (c) has been picked from stock room inventory.

7. A method as claimed in claim 5, comprising determining the time elapsed between (i) the date and time that an electronic price label has been actuated as provided for in step (a), and (ii) the date and time that an electronic price label has been actuated as provided for in step (e).

8. A method as claimed in claim 6, comprising determining the time elapsed between (i) the date and time that an electronic price label has been actuated as provided for in step (a), and (ii) the date and time that the product identified in step (c) has been picked from stock room inventory.

9. A computerized system for stocking products with an electronic price label system, comprising:
means for setting an electronic price label for actuation in the event that the shelf stock of a corresponding product has been depleted;
means for polling electronic price labels in the system to determine if any electronic price label has been actuated;
means for identifying the product corresponding to an electronic price label that has been actuated;
means for determining whether an identified product has been picked from stock room inventory; and
means for setting an electronic price label for actuation when the shelf stock of the identified product has been replenished.

10. A system as claimed in claim 9, wherein the electronic price labels comprise means for displaying visual indicia that the shelf stock of the product has been depleted and has not yet been replenished.

11. A system as claimed in claim 9, comprising means for determining the date and time that an electronic price label has been actuated.

12. A system as claimed in claim 9, comprising means for determining the date and time that a product has been picked from stock room inventory.
